# EUROPEAN PATENT SPECIFICATION

(11) **EP 1 388 923 B1**
(45) Date of publication and mention of the grant of the patent: **21.05.2008**
(21) Application number: 03018135.8
(22) Date of filing: 08.08.2003
(51) Int. Cl.: H02K 7/12

(54) **Rotating electric machine with adjustable airgap**
Drehende elektrische Maschine mit regelbarem Luftspalt
Machine électrique tournante à entrefer réglable

(30) Priority: 09.08.2002 JP 2002233986
(43) Date of publication of application: 11.02.2004
(73) Proprietor: Yamaha Hatsudoki Kabushiki Kaisha, Iwata-shi, Shizuoka-ken (JP)
(72) Inventor: Murota, Keiko, Iwata-shi, Shizuoka-ken (JP); Hino, Haruyoshi, Iwata-shi, Shizuoka-ken (JP); Naito, Shinya, Iwata-shi, Shizuoka-ken (JP); Ishihara, Hiroyuki, Iwata-shi, Shizuoka-ken (JP); Terada, Junji, Iwata-shi, Shizuoka-ken (JP); Ono, Tomohiro, Iwata-shi, Shizuoka-ken (JP)
(74) Representative: Grünecker, Kinkeldey, Stockmair & Schwanhäusser Anwaltssozietät

(56) References cited:
- EP-A- 0 304 974
- DE-C- 411 877
- DE-C- 839 224
- GB-A- 1 218 056
- US-B1- 6 404 097

## Description

The present invention relates to an electric machine. In particular, it relates to a rotating electric machine such as an electric motor for use in an electric two-wheeler or the like, such as a scooter or a motorbike. Even more particularly, the present invention relates to a rotating electric machine in which a gap is mechanically adjustable.

In an electric motor, the torque increases as a gap between the coil of the stator and the magnet of the rotor is decreased, and the rotational speed increases as the gap is increased. A technique for adjusting the gap is disclosed in Japanese Patent No. 2749560.

A motor in which the gap is electrically adjusted is, however, unavoidably large and heavy. Electrical gap adjustment is thus not necessarily preferred. Gap adjustment is also useful in a power generator to change the characteristics thereof.

US-B1-6 404 097 according to the preamble of claim 1 discloses an electric machine comprising a stator attached to a stationary casing and a rotor rotatable relative to the casing. The stator comprises a plurality of coils disposed in a circle around the central axis of the rotor. The rotor is rotatable about said axis with respect to the stator. The rotor is provided with a spider-shaped airgap varying means which is adjustable by means of a centrifugal force generated during the rotation of the rotor.

It is an object of the present invention to provide a compact structured electric machine in which a gap is mechanically adjustable.

This object is solved by the features of claim 1.

The machine may be an electric motor, in particular a drum motor for a two-wheeled vehicle such as a scooter or a motorbike, or a three-wheeled vehicle, or it may be a power generator.

In the following, the present invention is explained in greater detail in conjunction with the accompanying drawings, wherein:
- Fig. 1: is a side view of an electric two-wheeler employing an electric motor according to an embodiment, and
- Fig. 2: is a view illustrating the constitution of an electric motor according to the embodiment and around it.

Description will be made of an embodiment with reference to the drawings.

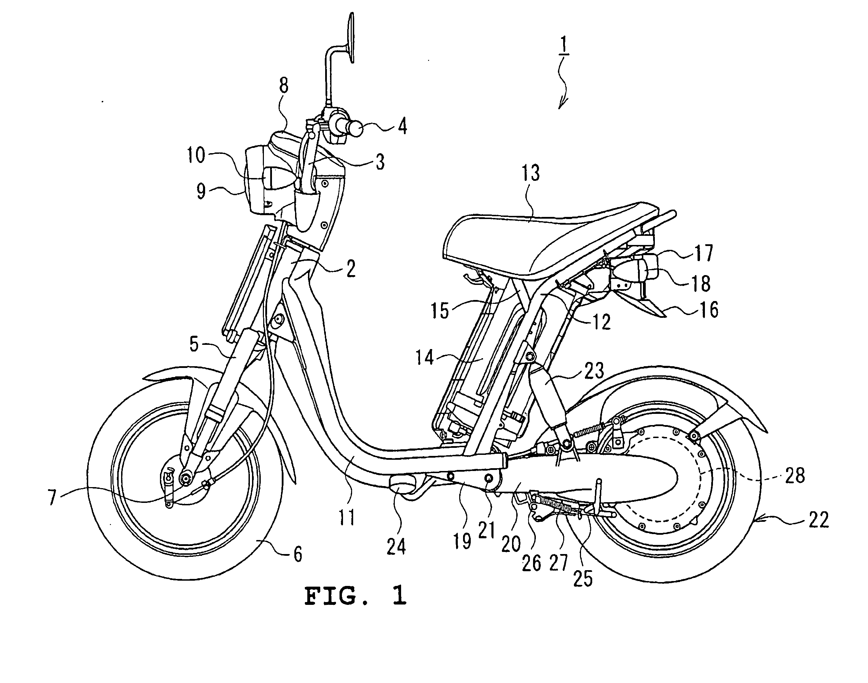

Fig. 1 is a side view of an electric two-wheeler employing an electric motor according to the present embodiment.

An electric two-wheeler 1 shown in Fig. 1 has a body comprising a head pipe 2 at an upper front part. A steering shaft (not shown) is rotatably inserted through the head pipe 2, and has an upper end to which handlebars 3 are attached. Grips 4 are fitted over the opposite ends of the handlebars 3. The grip 4 on the right side (on the far side in Fig. 1, not shown) constitutes a throttle grip which is rotatable.

The head pipe 2 has a lower part to which an upper part of a pair of right and left front forks 5 are attached. The front forks 5 have lower ends at which a front wheel 6 is rotatably mounted on a front wheel shaft 7. A meter 8 is disposed on the center of the handlebars 3 and a head lamp 9 is located under the meter 8. Flasher lamps 10 (only one of them is shown in Fig. 1) are provided on both sides of the head lamp 9.

A pair of right and left body frames 11 extend from the head pipe 2 toward the rear of the body. The body frames 11, which are made of circular pipes, extend obliquely downward from the head pipe 2 toward the rear of the body, curve in an arc, and extend approximately horizontally toward the rear of the body. A pair of right and left body frames 12 extend obliquely upward from the rear ends of the body frames 11 and are connected to each other behind a seat 13. A battery 14 is located between the right and left body frames 12.

A seat stay (not shown) having an inverted U-shape is connected to the right and left body frames 12 and supported by a pair of right and left stays 16 (only one of them is shown in the drawing). The seat 13 is openably and closably mounted on the seat stay.

A rear fender 16 is attached to the rear ends of the body frames 12. A tail lamp 17 is attached on the rear surface of the rear fender 16. Flasher lamps 18 (only one of them is shown in the drawing) are arranged on right and left sides of the tail lamp 17.

A pair of right and left rear arm brackets 19 (only one of them is shown in the drawing) are attached by welding to the rear ends of the right and left body frames 11, respectively. A rear arm 20 is supported at the front end by the rear arm brackets 19 via a pivot shaft 21 for vertical swinging movement. A rear wheel 22 as a driving wheel is rotatably mounted on the rear end of the rear arm 20. The rear arm 20 and the rear wheel 22 are suspended from the body frames 12 by a rear cushion 23.

The right and left body frames 11 have lower parts to which foot steps 24 (only one of them is shown in the drawing) are attached. The rear arm 20 has a lower part on which a side stand 25 is pivoted by a shaft 26. The side stand 25 is urged to the closed position by a return spring 27.

The rear arm 20 has an approximately circular portion at the rear end, in which an axial gap electric motor 28, which is flat in the direction of the width of the vehicle, is housed.

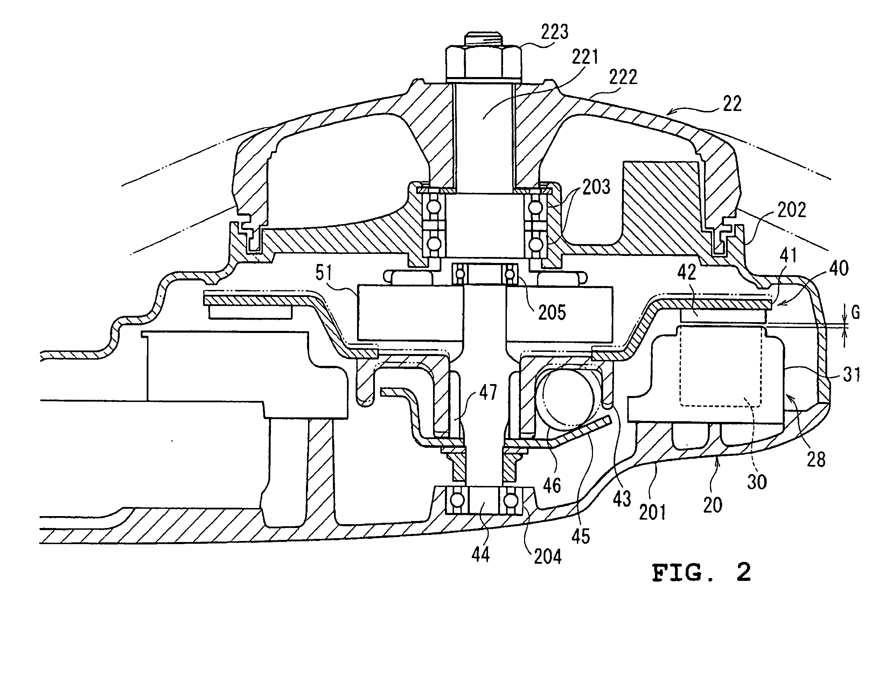

Fig. 2 is a view illustrating the constitution of the electric motor 28 and around it.

In Fig. 2, the upper side and the left side correspond to the right side and the front side, respectively, of the vehicle body.

A cover 202 is attached to a case (base) 201 as a housing provided at the rear end of the rear arm 20. Bearings 203 are provided at a center part in the cover 202. The rear wheel 22 has a wheel shaft (rear wheel shaft) 221 which is rotatably supported at its lower part by the bearings 203. The rear wheel shaft 221 extends through a wheel 222 and is supported from the outside by a nut 223 in such a manner that it can be rotated together with the rear wheel shaft 221. A tire (not shown) is mounted on the outer periphery of the wheel 222.

The electric motor 28 comprises mainly a stator 31 having a plurality of coils 30 disposed approximately in a circle about the rear wheel shaft 221 and a rotor 40 rotatable about the rear wheel shaft 221 with respect to the stator 31.

The rotor 40 has a rotor shaft 44 as a rotating shaft. One end of the rotor shaft 44 is rotatably supported by a bearing 204 secured to the case 201 and the other end thereof is rotatably supported on the rear wheel shaft 221 by a bearing 205.

The coils 30 of the stator 31 are molded with resin or the like. The stator 31 is housed in the case 201 and fixed thereto with a bolt or the like.

The rotor 40 comprises a yoke 41 having a plurality of magnetic poles 42 disposed approximately in a circle. The yoke 41 is a member obtained by one-stage drawing of a ring-shaped metal plate formed by punching. The magnetic poles 42 have a rectangular shape and are bonded to the yoke 41 with their polarity alternately reversed. There is a gap G between the magnetic poles 42 and the coils 30 in the direction of the axis of the rear wheel shaft 221 (which will be hereinafter referred to simply as "axial direction").

The yoke 41 has an inner peripheral portion into which a ring 43, which is a ring-shaped metal member, is fitted. The yoke 41 and the ring 43 constitute a first part.

The ring 43 has an inner peripheral portion drawn toward the case 201, and is supported by the rotor shaft 44 via a cylindrical serration ring 47. The serration ring 47 has an outer periphery on which serration grooves are formed in the longitudinal direction of the rotor shaft 44 and is press-fitted on the rotor shaft 44. The ring 43 has an inner periphery having a configuration corresponding to the serration grooves. Thus, the ring 43 is movable only in the direction along the axis of the rotor shaft 44. The ring 43 has an outer peripheral portion drawn toward the case 201 and fitted to the yoke 41.

A weight receptacle 45, which is ring-shaped as seen in the axial direction, is supported on a periphery of the rotor shaft 44 on the side of the case 201 from the serration ring 47. The weight receptacle 45 corresponds to a second part. The weight receptacle 45 is rotatable together with the first part and immovable in the axial direction.

A plurality of ball-shaped weights 46 are housed in a space defined by the weight receptacle 45 and the ring 43. The weight receptacle 45 has portions for receiving the weights 46 which are sloped to the outer periphery toward the ring 43. The portions of the weight receptacle 45 other than the portions for receiving the weights 46 are folded toward the ring 43 so that the weights 46 will not move circumferentially. The weights 46 are located at positions dividing the circumference of the rotor 40 into equal segments as seen in the axial direction.

A planetary gear transmission 51 is provided around the rotor shaft 44. The planetary gear transmission 51 has a housing fixed to the rear wheel shaft 221, and is housed in a case therefor (not shown) in the cover 202.

When the rotor 40 is rotated, centrifugal force is applied to the weights 45, and the weights 45 are moved toward the outer periphery. Then, the weights 45 ascend the inclined portions of the weight receptacle 45 and urge the ring 43 upward in the drawing. Thereby, the ring 43 and the yoke 41 are moved upward and the gap G is widened. Since the centrifugal force applied to the weights 45 increases as rotational speed of the rotor 30 increases, the gap G becomes wider as the rotor 30 is rotated at higher speed.

When the rotational speed of the rotor 40 is decreased, the weights 45 descend the inclined portions of the weight receptacle 45. Then, the ring 43 and yoke 41 is moved downward and the gap G is narrowed. It is therefore possible to obtain various torque characteristics in a single electric motor.

The ring 43 and the weights 46 are disposed in the inner side of the coils 30 as seen in the axial direction. The weights 46 are overlapped with the coils 30 in the axial direction.

Thus, the rear wheel 22 can be compact, making it possible to realize a rear wheel which is slim and stylish. Also, the width of the rear wheel 22 can be small so that the two-wheeler can be banked (tilted) at a large angle.

Since the weights 46 are located at positions dividing the circumference of the rotor 40 into equal segments as seen in the axial direction, the rotation of the rotor 40 can be stabilized and the variations of the gap G can be reduced.

Although this embodiment is an electric motor, the teaching of the present embodiment is applicable to other rotating electric machines including power generators.

The description above discloses a rotating electric machine comprising: a stator having a plurality of coils disposed approximately in a circle around an axis; and a rotor rotatable about the axis with respect to the stator; the rotor comprising: a first part having a plurality of magnetic poles disposed approximately in a circle with a gap between them and the coils and movable along the axis; a second part rotatable together with the first part and immovable along the axis; and a weight disposed between the first and second parts and rotatable together with the first and second parts and movable in response to rotation of the rotor, wherein, when the rotational speed of the rotor is increased, the weight is moved to move the first part away from the second part in the direction of the axis. Therefore, there can be provided a compact rotating electric machine in which a gap is mechanically adjustable.

In the above-described embodiment the second part and the weight are disposed in the inner side of the coils as seen along the axis. Therefore, there can be provided a compact rotating electric machine in which a gap is mechanically adjustable.

Furthermore the beneficial weight is overlapped with the coils in the direction of the axis. Therefore, there can be provided a compact rotating electric motor in which a gap is mechanically adjustable.

Thus, in brief, there is provided a rotating electric machine in which a gap is mechanically adjustable, wherein when a rotor 40 is driven to rotate, centrifugal force is applied to weights 45 and the weights 45 are moved toward the outer periphery. Then, the weights 45 ascend inclined portions of a weight receptacle 45 and urge a ring 43 upward. Thereby, the ring 43 and a yoke 41 are moved upward and a gap G is widened.

## Claims

1. Electric machine (28) having a stator (31) attached to a base (201) and a rotor (40) rotatable relative to the base (201), wherein an gap (G) between the stator (31) and the rotor (40) is adjustable by means of a centrifugal force generated during rotation of the rotor (40),
the stator (31) comprises a plurality of coils (30), in particular disposed approximately in a circle around a central axis of the rotor (40), wherein the rotor (40) is rotatable about said axis with respect to said stator (31), and
said rotor (40) comprises a first part (41,43) having a plurality of magnetic poles (42), in particular disposed approximately in a circle, wherein the gap (G) is provided between said magnetic poles (42) and said coils (30), and wherein the first part (41,43) is movable in a direction of said axis,
**characterized in that**
said first part comprises a yoke (41) and a ring (43), wherein the ring (43) is fitted into an inner peripheral portion of the yoke (41),
said rotor (40) further comprises a second part (45) being rotatable together with said first part (41,43) and being immovable in the direction of said axis,
said second part is a weight receptacle (45) supported on a shaft (44) of the rotor (40),
an adjusting means (46) is provided being disposed between said first (41,43) and second (45) parts, being rotatable together with said first (41,43) and second (45) parts, and being radially movable in response to a rotation of said rotor (40) to displace said first part in the direction of said axis, wherein
said adjusting means is at least one weight (46), in particular a plurality of weights (46), housed in a space defined between the weight receptacle (45) and the ring (43),
said second part (41,43) and said adjusting means (46) are disposed in an inner side of said coils (30) as seen along said axis, and
said adjusting means (46) is overlapped with said coils (31) in the direction of said axis.

2. Electric machine according to claim 1, **characterized in that** the machine is an electric motor (28), in particular a drum motor for a two-wheeled vehicle such as a scooter or a motorbike, or a three-wheeled vehicle, or **in that** the machine is a power generator.

## Patentansprüche

1. Elektrische Maschine (28) mit einem Stator (31), verbunden mit einer Basis (201) und einem Rotor (40), der im Verhältnis zu der Basis (201) drehbar ist, wobei ein Spalt (G) zwischen dem Stator (31) und dem Rotor (40) mittels einer Zentrifugalkraft, erzeugt während der Drehung des Rotors (40), einstellbar ist,
wobei der Stator (31) eine Mehrzahl von Spulen (30) aufweist, insbesondere angeordnet ungefähr in einem Kreis um eine Mittelachse des Rotors (40) herum,
wobei der Rotor (40) um diese Achse in Bezug zu dem Stator (31) drehbar ist,
wobei der Rotor (40) aufweist ein erstes Teil (30) mit einer Mehrzahl von Magnetpolen (42), insbesondere ungefähr in einem Kreis angeordnet, wobei der Spalt (G) zwischen den Magnetpolen (42) und den Spulen (30) vorgesehen ist und wobei das erste Teil (41, 43) in einer Richtung der Achse bewegbar ist,
**dadurch gekennzeichnet, dass**
das erste Teil ein Joch (41) und einen Ring (43) aufweist, wobei der Ring (43) in den inneren Umfangsabschnitt des Jochs (41) eingesetzt ist,
der Rotor (40) außerdem einen zweiten Teil (45) aufweist, der gemeinsam mit dem ersten Teil (41, 43) drehbar ist und in der Richtung der Achse unbeweglich ist,
das zweite Teil ein Gewichtaufnahmebehälter (45) ist, der auf einer Welle (44) des Rotors (40) gelagert ist,
eine Einstelleinrichtung (46) vorgesehen ist, die zwischen den ersten (41, 43) und den zweiten (45) Teilen angeordnet ist, die gemeinsam mit den ersten (41, 43) und den zweiten (45) Teilen drehbar und radial bewegbar in Abhängig von einer Rotation des Rotors (40) ist, um das erste Teil in der Richtung der Achse zu verlagern, wobei die Einstelleinrichtung zumindest ein Gewicht (46), insbesondere eine Mehrzahl von Gewichten (46) ist, aufgenommen in einem Raum, der zwischen dem Gewichtaufnahmebehälter (45) und dem Ring (43) gebildet ist,
wobei das zweite Teil (41, 43) und die Einstelleinrichtung (46) in einer Innenseite der Spulen (30), wenn entlang der Achse gesehen, angeordnet sind, und
die Einstelleinrichtung (46) mit den Spulen (31) in der Richtung der Achse überlappt ist.

2. Elektrische Maschine nach Anspruch 1, **dadurch gekennzeichnet, dass** die Maschine ein Elektromotor (28) , insbesondere ein Trommelmotor für ein zweirädriges Fahrzeug, z. B. für einen Roller oder ein Motorrad oder ein dreirädriges Fahrzeug ist, oder **dadurch**, dass die Maschine ein Energieerzeuger ist.

## Revendications

1. Machine électrique (28) comportant un stator (31) fixé à une embase (201) et un rotor (40) pouvant tourner par rapport à l'embase (201), dans laquelle un entrefer (G) entre le stator (31) et le rotor (40) est ajustable au moyen d'une force centrifuge générée au cours de la rotation du rotor (40),
le stator (31) comprend une pluralité de bobines (30), en particulier disposées approximativement selon un cercle autour d'un axe central du rotor (40), dans laquelle le rotor (40) peut tourner autour dudit axe par rapport audit stator (31), et
ledit rotor (40) comprend une première partie (41, 43) comportant une pluralité de pôles magnétiques (42), en particulier disposés approximativement selon un cercle, dans laquelle ledit entrefer (G) est placé entre lesdits pôles magnétiques (42) et lesdites bobines (30), et dans laquelle la première partie (41, 43) est mobile suivant une direction dudit axe,
**caractérisée en ce que**
ladite première partie comprend une culasse (41) et un anneau (43), dans laquelle l'anneau (43) est monté dans une partie périphérique interne de la culasse (41),
ledit rotor (40) comprend, en outre, une seconde partie (45) pouvant tourner conjointement avec ladite première partie (41, 43) et qui est immobile suivant la direction dudit axe,
ladite seconde partie est un réceptacle de poids (45) supporté sur un arbre (44) du rotor (40),
un moyen d'ajustement (46) est placé en étant disposé entre lesdites première (41, 43) et seconde (45) parties, et étant radialement mobile en réponse à une rotation dudit rotor (40) afin de déplacer ladite première partie suivant la direction dudit axe, dans laquelle
ledit moyen d'ajustement est au moins un poids (46), en particulier une pluralité de poids (46), logé dans un espace défini entre le réceptacle de poids (45) et l'anneau (43),
ladite seconde partie (41, 43) et ledit moyen d'ajustement (46) sont disposés dans un côté interne desdites bobines (30) en regardant le long dudit axe, et
ledit moyen d'ajustement (46) est en chevauchement avec lesdites bobines (31) suivant la direction dudit axe.

2. Machine électrique selon la revendication 1, **caractérisée en ce que** la machine est un moteur électrique (28), en particulier un moteur à tambour pour un véhicule à deux roues tel qu'un scooter ou une motocyclette, ou un véhicule à trois roues, ou **en ce que** la machine est un générateur de puissance.
